# EUROPÄISCHE PATENTANMELDUNG

(11) **EP 3 715 044 A1**
(43) Veröffentlichungstag der Anmeldung: **30.09.2020**
(21) Anmeldenummer: 19166353.3
(22) Anmeldetag: 29.03.2019
(51) Int. Cl.: B23P 19/04, B60J 10/00

(54) **VERFAHREN UND VORRICHTUNG ZUR AUFBRINGUNG EINER DICHTUNG AUF EINE FLÄCHE**

(71) Anmelder: IBG-Automation GmbH, 58809 Neuenrade (DE)
(72) Erfinder: Goeke, Matthias, 58809 Neuenrade (DE)
(74) Vertreter: Ramrath, Lukas

(57) **Zusammenfassung**

Die Erfindung betrifft ein Verfahren und eine Vorrichtung zum Aufbringen einer Dichtung (2) auf eine Fläche (28), insbesondere auf einen Flansch einer Fahrzeugöffnung (44), wobei die Vorrichtung (1) mindestens ein Fahrgestell (3) und mindestens ein Applikationsmittel für die Dichtung (2) umfasst, wobei die Vorrichtung Mittel zur selbstfahrenden Bewegung entlang der Fläche (28) umfasst.

## Beschreibung

Die Erfindung betrifft ein Verfahren und eine Vorrichtung zum Aufbringen einer Dichtung auf eine Fläche, insbesondere auf einen Flansch einer Fahrzeugöffnung.

Die DE 10 2007 033 363 A1 offenbart ein Verfahren zum Aufbringen einer Dichtung auf eine Fläche, bei dem ein Dichtungsstreifen mit einer an einem Applikatorrahmen vorgesehen Applikationsrolle unter Verwendung einer Klebeschicht an die Fläche angelegt und hierfür die Applikationsrolle mit Hilfe eines Handlinggeräts, beispielsweise eines Roboters, dem Verlauf und/oder der Kontur der Fläche folgend entlang dieser Fläche bewegt wird.

Nachteilig bei diesem Verfahren ist der hohe Bauraumbedarf und die hohen Herstellungskosten durch die Verwendung des zusätzlichen Handlinggeräts zur Bewegung des Applikatorrahmens.

Es stellt sich daher das technische Problem, ein Verfahren und eine Vorrichtung zum Aufbringen einer Dichtung auf eine Fläche, insbesondere auf einen Flansch einer Fahrzeugöffnung, zu schaffen, die den Bauraumbedarf für die Vorrichtung zur Aufbringung der Dichtung sowie die Herstellungskosten reduzieren und eine zuverlässige Aufbringung ermöglichen.

Die Lösung des technischen Problems ergibt sich durch die Gegenstände mit den Merkmalen der unabhängigen Ansprüche. Weitere vorteilhafte Ausgestaltungen der Erfindung ergeben sich aus den Unteransprüchen.

Vorgeschlagen wird eine Vorrichtung zum Aufbringen einer Dichtung auf eine Fläche, insbesondere auf einen Flansch einer Fahrzeugöffnung. Die Dichtung kann insbesondere in Form eines Dichtungsstreifens, insbesondere eines selbstklebenden Dichtungsstreifens oder -bands, bereitgestellt sein. Die Vorrichtung ermöglicht das Anlegen des selbstklebenden Dichtungsstreifens gegen die Fläche, insbesondere mit Hilfe einer Applikationsrolle, wobei eine Klebeseite der Dichtung auf die Fläche aufgebracht werden kann.

Die Fläche kann von einem Körper ausgebildet werden. Der Körper kann insbesondere ein Fahrzeug oder Fahrzeuggestell, weiter insbesondere ein Fahrzeugdach, sein.

Die erwähnte Fahrzeugöffnung kann insbesondere eine Schiebedachöffnung im Dach des Fahrzeugs sein. Nach Applikation der Dichtung kann dann ein Glasdach eingesetzt werden, wobei die aufgebrachte Dichtung die Öffnung mit dem Glasdach abdichtet.

Die Vorrichtung umfasst mindestens ein Fahrgestell und Applikationsmittel für die Dichtung.

Das/Die Applikationsmittel kann hierbei eine Gesamtheit von Bauteilen der Vorrichtung bezeichnen, die zur Aufbringung der Dichtung auf die Fläche dienen. So können Applikationsmittel insbesondere die mindestens eine vorhergehend erläuterte Applikationsrolle umfassen. Weiter können Applikationsmittel ein Dichtungsführungsmittel umfassen, welches der Bewegungsführung des Dichtungsmittels bei der Zuführung zur der zu beklebenden Fläche dient. Das Dichtungsführungsmittel kann insbesondere eine Zuführeinrichtung sein. Diese kann beispielsweise einen gekrümmten Abschnitt aufweisen oder ausbilden, wobei das Dichtungsband entlang dieses Abschnitts zur Vorrichtung und zur beklebenden Fläche zugeführt wird. Weiter können Applikationsmittel eine Dichtungs-Antriebseinrichtung umfassen. Diese kann zum Antrieb der erläuterten Applikationsrolle dienen. Weiter können Applikationsmittel eine Abzieheinrichtung für eine Schutzfolie, die vor der Applikation auf der Klebefläche der Dichtung angebracht ist, umfassen. Die Abzieheinrichtung kann hierbei als Messer ausgebildet sein oder ein solches umfassen. Weiter können Applikationsmittel eine Vorschubrolle zum Antrieb der Dichtung beim Transport zu der zu beklebenden Fläche dienen.

Genau eines, mehrere, aber nicht alle, vorzugsweise aber alle, der genannten Elemente der Applikationsmittel können hierbei an dem Fahrgestell befestigt, insbesondere gelagert, sein.

Eine Befestigung im Sinne dieser Erfindung kann insbesondere eine starre Befestigung sein. Selbstverständlich kann eine Befestigung aber auch eine bewegliche Befestigung sein. Eine Befestigung kann weiter eine lösbare oder unlösbare Befestigung sein.

Erfindungsgemäß umfasst die Vorrichtung Mittel zur selbstfahrenden Bewegung entlang der Fläche. Mittel zur selbstfahrenden Bewegung können hierbei Elemente der Vorrichtung umfassen, durch die eine selbstfahrende Bewegung entlang der Fläche erzeugt/durchgeführt werden kann. Selbstfahrend kann im Kontext dieser Erfindung bedeuten, dass die Vorrichtung alle notwendigen Elemente/Einrichtungen umfasst, um eine Fahrbewegung entlang der Fläche durchzuführen. Die selbstfahrende Bewegung kann insbesondere mit gewünschten Bewegungseigenschaften, z.B. einer gewünschten Beschleunigung, einer gewünschten Geschwindigkeit und einem gewünschten Weg, durchgeführt werden.

Hiermit ergibt sich im Unterschied zu der einleitend genannten DE 10 2007 033 363 A1, dass kein weiteres Handlinggerät, insbesondere kein Roboter, benötigt wird, um den Applikatorrahmen entlang dem Verlauf und/oder der Kontur der mit der Dichtung zu versehenden Fläche zu bewegen. Insbesondere ist die Vorrichtung somit nicht handlinggerät- oder robotergeführt. Weiter kann die Vorrichtung entsprechend keine Schnittstelle zur Befestigung an einem Handlinggerät umfassen.

Es wird somit ermöglicht, dass die Vorrichtung sich selbstfahrend entlang der Fläche bewegt und hierbei die Dichtung auf die entsprechende Fläche durch die Applikationsmittel aufgebracht wird.

Durch das Vorsehen von Mittel zur selbstfahrenden Bewegung ergibt sich in vorteilhafter Weise, dass kein Handlingsgerät benötigt wird, um dem Verlauf bzw. der Kontur der Fläche zu folgen, wodurch einerseits ein Bauraumbedarf der Vorrichtung reduziert wird und Herstellungskosten gesenkt werden. Auch wird das Aufbringen der Dichtung vereinfacht.

In einer weiteren Ausführungsform umfassen die Mittel zur selbstfahrenden Bewegung mindestens eine Antriebseinrichtung. Die Antriebseinrichtung kann als elektrische Maschine, insbesondere als Servomotor, ausgebildet sein. Selbstverständlich können auch andere Antriebseinrichtungen, wie z.B. Schrittmotoren, zum Einsatz kommen. Es ist beispielsweise möglich, dass die Antriebseinrichtung die elektrische Maschine eines Ackuschraubers ist.

Die Antriebseinrichtung kann hierbei zur Erzeugung einer Antriebskraft für die selbstfahrende Bewegung dienen. Im Sinne dieser Erfindung umfasst der Begriff "Kraft" auch den Begriff "Moment", soweit nicht abweichend erläutert.

Die Antriebseinrichtung kann hierbei an dem Fahrgestell befestigt oder gelagert sein.

Hierdurch ergibt sich in vorteilhafter Weise eine zuverlässige Bewegung, da die Antriebskraft nicht von einer externen Einrichtung erzeugt und auf die Vorrichtung übertragen werden muss.

In einer weiteren Ausführungsform umfassen die Mittel zur selbstfahrenden Bewegung mindestens eine Energiespeichereinrichtung zum Betrieb der Antriebseinrichtung. Diese kann insbesondere als Akkumulator ausgebildet sein. Auch die Energiespeichereinrichtung kann an dem Fahrgestellt befestigt oder gelagert sein.

Hierdurch ergibt sich in vorteilhafter Weise ebenfalls eine zuverlässige Erzeugung der Antriebskraft, da auch die hierzu benötigte Energie nicht von einer weiteren Einrichtung zugeführt werden muss.

In einer weiteren Ausführungsform umfassen die Mittel zur selbstfahrenden Bewegung mindestens eine Antriebsrolle. Die Antriebsrolle dient hierbei zur Übertragung einer Antriebskraft auf die bereits auf die Fläche aufgebrachte Dichtung oder die mit der Dichtung zu versehenden Fläche oder auf einen die Fläche ausbildenden Körper oder auf einen ortsfest relativ zur Fläche angeordneten weiteren Körper, beispielsweise einen fest mit dem die Fläche ausbildenden Körper verbundenen weiteren Körper. Somit kann die Antriebsrolle auch eine weitere Applikationsrolle bilden.

Vorzugsweise umfassen die Mittel zur selbstfahrenden Bewegung zwei Antriebsrollen. Diese können derart angeordnet und/oder ausgebildet sein, dass eine der Antriebsrollen zur Übertragung einer Antriebskraft auf die mit der Dichtung zu versehenden Fläche oder auf einen die Fläche ausbildenden Körper oder auf einen ortsfest relativ zur Fläche angeordneten weiteren Körper dient, wobei die weitere Antriebsrolle zur Übertragung einer Antriebskraft auf die bereits auf die Fläche aufgebrachte Dichtung dient. Diese bildet somit eine weitere Applikationsrolle.

Hierbei kann von der Antriebseinrichtung erzeugte Antriebskraft auf die mindestens eine Antriebsrolle übertragen werden. Hierzu kann die Vorrichtung Mittel zur Kraftübertragung, beispielsweise eine mechanische Kopplung oder ein Getriebe, umfassen. Wie nachfolgend noch näher erläutert, können die Mittel zur Kraftübertragung einen Riemen umfassen. Durch die erläuterte Kraftübertragung mittels der Antriebsrolle kann die erläuterte selbstfahrende Bewegung in zuverlässiger Weise erzeugt werden.

Weiter können die Mittel zur selbstfahrenden Bewegung mindestens eine Führungsrolle zur Bewegungsführung umfassen. Vorzugsweise umfassen die Mittel zur selbstfahrenden Bewegung mehrere Führungsrollen zur Führung der selbstfahrenden Bewegung, beispielsweise entlang der Dichtung oder der Fläche oder der diese Fläche ausbildenden Körper oder des erläuterten weiteren Körpers.

Weiter können die Mittel zur selbstfahrenden Bewegung mindestens eine Abstützrolle zum Abstützen der Vorrichtung umfassen, beispielsweise auf dem die Fläche ausbildenden Körper oder dem weiteren Körper.

Weiter können die Mittel zur selbstfahrenden Bewegung mindestens eine Lenkrolle zum Lenken der selbstfahrenden Bewegung und somit zum Einstellen der Bewegungsrichtung der selbstfahrenden Bewegung umfassen. Auch können die Mittel eine Lenkeinrichtung zum Einstellen eines Lenkwinkels umfassen. Hierdurch ergibt sich in vorteilhafter Weise, dass die Vorrichtung zuverlässig und mit einer gewünschten Genauigkeit die selbstfahrende Bewegung durchführen kann.

In einer weiteren Ausführungsform ist genau ein, mehrere, aber nicht alle, oder aber alle Elemente der Mittel zur selbstfahrenden Bewegung an dem Fahrgestell angeordnet. Dies kann bedeuten, dass die Mittel an dem Fahrgestell befestigt sind. Hierbei können die Elemente mechanisch starr an dem Fahrgestell befestigt sein, z.B. die erläuterte Antriebs- und Energiespeichereinrichtung. Weitere Elemente können beweglich an dem Fahrgestell befestigt oder gelagert sein, z.B. die Führungsrolle, die Lenkrolle oder die Abstützrolle. Hierdurch ergibt sich in vorteilhafter Weise eine bauraumsparende Konstruktion der Vorrichtung.

In einer weiteren Ausführungsform umfassen die Mittel zur selbstfahrenden Bewegung einen Antriebsriemen. Der Antriebsriemen kann insbesondere zur Kraftübertragung von der Antriebseinrichtung zu der mindestens einen Antriebsrolle dienen. Auch der Antriebsriemen kann hierbei an dem Fahrgestell gelagert sein.

Weiter kann die Vorrichtung, insbesondere die Mittel zur selbstfahrenden Bewegung, mindestens eine, vorzugsweise mehrere, Umlenkrolle(n) umfassen, die zum Umlenken und/oder Spannen des Antriebsriemens dienen. Weiter kann die Vorrichtung, insbesondere die Mittel zur selbstfahrenden Bewegung, mindestens eine Übertragungsrolle umfassen, wobei mit der Übertragungsrolle eine vom Riemen auf die Übertragungsrolle übertragene Kraft auf eine Welle übertragen werden kann, wobei an der Welle z.B. die Antriebsrolle befestigt sein kann. Weiter kann die Vorrichtung, insbesondere die Mittel zur selbstfahrenden Bewegung, mindestens eine Zahnradrolle umfassen, wobei auf einen gezahnten Abschnitt der Rolle Kräfte mittels eines Zahnrads übertragen werden können, wobei auf einen Riemenabschnitt Kräfte auf den Riemen übertragen werden können.

Hierdurch ergibt sich in vorteilhafter Weise eine einfache und für die nachfolgend noch näher erläuterten beweglichen Antriebseinrichtungen zuverlässige Kraftübertragung von der Antriebseinrichtung auf die mindestens eine Antriebsrolle.

In einer weiteren Ausführungsform umfassen die Mittel zur selbstfahrenden Bewegung mindestens eine Antriebsrolle. Dies wurde vorhergehend bereits erläutert. Die Antriebsrolle ist hierbei mit mindestens einem Rotationsfreiheitsgrad drehbeweglich und mit mindestens einem von diesem Rotationsfreiheitsgrad verschiedenen Freiheitsgrad beweglich. Der Rotationsfreiheitsgrad kann insbesondere die Drehbewegung ermöglichen, durch die Kraft zum Antrieb der Vorrichtung übertragen wird. Der weitere, von diesem Rotationsfreiheitsgrad verschiedene Freiheitsgrad kann insbesondere ein Translationsfreiheitsgrad sein. Somit kann es möglich sein, dass die Antriebsrolle neben der Rotationsbewegung auch eine Linearbewegung durchführen kann. Die Linearbewegung kann hierbei insbesondere senkrecht zur Rotationsachse der erläuterten Drehbewegung orientiert sein. Insbesondere kann die Linearbewegung eine Bewegung der Antriebsrolle auf die mit der Dichtung zu versehenden Fläche zu und von dieser Fläche weg ermöglichen. Hierdurch ergibt sich in vorteilhafter Weise, dass die Antriebsrolle dem räumlichen Verlauf der Fläche, insbesondere auch Krümmungen, möglichst zuverlässig folgen und hierbei die Antriebskraft übertragen kann.

In einer weiteren Ausführungsform umfasst die Vorrichtung Führungsmittel zur Bewegungsführung der Antriebsrollen. Insbesondere können die Führungsmittel zur Führung der Bewegung der Antriebsrolle dienen, die mit dem von dem erläuterten Rotationsfreiheitsgrad verschiedenen Freiheitsgrad erfolgt. Insbesondere können also die Führungsmittel die erläuterte Linearbewegung der Antriebsrolle führen.

Diese Führungsmittel können beispielsweise einen Schlitten und ein Schlittenführungselement umfassen, wobei die Antriebsrolle an dem Schlitten befestigt oder mit diesem verbunden sein kann. Das Führungselement wiederum kann an dem erläuterten Fahrgestell befestigt sein, insbesondere starr. Hierdurch ergibt sich in vorteilhafter Weise eine definierte Bewegung der Antriebsrolle und somit eine zuverlässige Kraftübertragung.

In einer weiteren Ausführungsform umfassen die Mittel zur selbstfahrenden Bewegung mindestens ein Andruckfederelement zum Andrücken einer Antriebsrolle, insbesondere an die mit der Dichtung zu versehenden Fläche. Das Andruckfederelement kann hierbei derart angeordnet und/oder ausgebildet sein, dass die Antriebsrolle durch das Andruckfederelement an die Fläche oder den vorhergehend erläuterten Körper oder weiteren Körper angedrückt wird. Insbesondere kann das Andruckfederelement ein vorgespanntes Federelement sein, wenn die Antriebsrolle an der Fläche oder dem vorhergehend erläuterten Körper anliegt. Das Andruckfederelement kann insbesondere eine Kraft für die vorhergehend erläuterte Linearbewegung der Antriebsrolle erzeugen, die auch als Andrückbewegung bezeichnet werden kann. Das Andruckfederelement kann hierbei an dem Fahrgestell gelagert sein.

Hierdurch ergibt sich in vorteilhafter Weise, dass die Antriebsrolle zuverlässig die Antriebskraft übertragen kann und somit die Vorrichtung die Bewegung zuverlässig mit den erläuterten gewünschten Bewegungseigenschaften durchführen kann.

In einer weiteren Ausführungsform umfasst die Vorrichtung, insbesondere die Mittel zur selbstfahrenden Bewegung, Führungsmittel zur Bewegungsführung. Z.B. kann die Vorrichtung mindestens eine Führungsrolle zum Ablaufen auf der Dichtung oder der Fläche oder auf einem Körper, der die Fläche ausbildet, oder auf dem vorhergehend erläuterten weiteren Körper aufweisen.

Ist die Fläche durch einen Flansch einer Fahrzeugöffnung gebildet, so kann die Vorrichtung mindestens eine Führungsrolle zum Ablaufen auf einer Oberseite des Fahrzeugdachs umfassen. Weiter kann die Vorrichtung mindestens eine Führungsrolle zum Ablaufen auf der Flanschoberfläche umfassen. Weiter kann die Vorrichtung mindestens eine Führungsrolle zum Ablaufen auf einer Unterseite des Fahrzeugdachs und/oder zum Ablaufen auf einer Flanschinnenfläche umfassen.

Durch diese Führungsmittel ergibt sich in vorteilhafter Weise eine zuverlässige Bewegungsführung der Vorrichtung bei der selbstfahrenden Bewegung, insbesondere entlang eines Fahrzeugdachs.

In einer weiteren Ausführungsform umfasst die Vorrichtung Befestigungsmittel zum Befestigen der Vorrichtung an einem die Fläche ausbildenden Körper. Die Befestigung kann hierbei eine die selbstfahrende Bewegung freigebende oder ermöglichende Befestigung sein. Die Befestigungsmittel können insbesondere derart angeordnet und/oder ausgebildet sein, dass die Vorrichtung beweglich an dem Körper befestigt ist. Die Befestigungsmittel können insbesondere als Einspannmittel ausgebildet sein. Insbesondere können die Mittel auch derart angeordnet und/oder ausgebildet sein, dass die Vorrichtung mit dem Körper verspannt wird. Die Befestigung kann hierbei eine form- oder kraftschlüssige Befestigung sein. Hierdurch ergibt sich in vorteilhafter Weise, dass die selbstfahrende Bewegung entlang der Fläche zuverlässig durchgeführt wird, insbesondere weil die Vorrichtung an auch während der Bewegung an dem die Fläche ausbildenden Körper befestigt werden kann.

Weiter können die Befestigungsmittel ein Federelement zum Andrücken einer Führungsrolle umfassen. Insbesondere kann das Federelement zum Andrücken der Führungsrolle derart angeordnet und/oder ausgebildet sein, dass die Führungsrolle an dem die Fläche ausbildenden Körper angedrückt wird. Insbesondere kann die Führungsrolle an eine Innenseite des die Fläche ausbildenden Abschnitts des Körpers angedrückt werden, wobei die Innenseite eine der Fläche gegenüberliegende Seite des Abschnitts bezeichnen kann. Das Federelement kann hierbei ein im Normalbetrieb, also während der selbstfahrenden Bewegung, vorgespanntes Federelement sein. Hierdurch ergibt sich in vorteilhafter Weise eine einfache und zuverlässige Befestigung der Vorrichtung an dem erläuterten Körper.

In einer weiteren Ausführungsform umfasst das Fahrgestellt mindestens zwei beweglich aneinander befestigte Teilgestelle. Die beiden Teilgestelle können hierbei insbesondere drehbeweglich relativ zueinander, also mit anderen Worten schwenkbar, aneinander befestigt sein. Selbstverständlich können die beweglich aneinander befestigten Teilgestelle auch linear beweglich relativ zueinander aneinander befestigt sein.

Weiter sind die Applikationsmittel, insbesondere genau ein, mehrere, aber nicht alle oder aber alle Element(e) der Applikationsmittel, an einem ersten Teilgestell und mindestens eine Führungsrolle, insbesondere eine Führungsrolle zur Befestigung der Vorrichtung an dem die Fläche ausbildenden Körper, an einem zweiten Teilgestell angeordnet. Auch die Mittel zur selbstfahrenden Bewegung, insbesondere genau ein, mehrere, aber nicht alle oder aber alle Element(e) dieser Mittel können an dem ersten Teilgestell befestigt/gelagert sein. Weiter können die Befestigungsmittel zur Befestigung der Vorrichtung an dem die Fläche ausbildenden Körper an dem zweiten Teilgestell befestigt/gelagert sein.

Weiter ist es möglich, dass das vorhergehend erläuterte Andruckfederelement zum Andrücken der Antriebsrolle an dem ersten Teilgestell gelagert ist und sich zur Krafterzeugung an dem zweiten Teilgestell abstützt, insbesondere an einem Langloch des zweiten Teilgestells, wobei die Antriebsrolle an dem ersten Teilgestell befestigt/gelagert ist.

In einer ersten Relativstellung zwischen dem ersten und dem zweiten Teilgestell kann die Vorrichtung an dem die Fläche ausbildenden Körper - wie vorhergehend erläutert - befestigt sein. Diese Stellung kann auch als Befestigungsstellung oder geschlossene Stellung bezeichnet werden. Insbesondere ist in dieser geschlossenen Stellung eine Bewegung der Vorrichtung senkrecht zur Fläche und von dieser weg nicht möglich. In einer weiteren Relativstellung, die auch als gelöste oder geöffnete Stellung bezeichnet werden kann, ist die Vorrichtung nicht an dem die Fläche ausbildenden Körper befestigt oder mit diesem verspannt. Insbesondere ist eine Bewegung der Vorrichtung senkrecht zur Fläche und von dieser weg freigegeben. Diese Stellung ermöglicht eine gute Montierbarkeit oder Demontierbarkeit der Vorrichtung an/von dem die Fläche ausbildenden Körper.

Durch eine Relativbewegung zwischen den beiden Teilgestellen kann die Vorrichtung in den erläuterten geöffneten Zustand oder den gelösten Zustand versetzt werden.

Die bewegliche Lagerung der beiden Teilgestelle aneinander ermöglicht in vorteilhafter Weise eine gute De-/Montierbarkeit der Vorrichtung vor der Durchführung der selbstfahrenden Bewegung zur Aufbringung der Dichtung an dem die Fläche ausbildenden Körper.

In einer weiteren Ausführungsform umfasst die Vorrichtung Verriegelungsmittel zur Verriegelung der Relativbewegung der beweglich aneinander befestigten Teilgestelle. Die Verriegelungsmittel können hierbei derart angeordnet und/oder ausgebildet sein, dass in einem Verriegelungszustand die Relativbewegung der Teilgestelle zueinander verhindert wird bzw. nicht möglich ist. In einem Freigabezustand kann die Relativbewegung freigegeben sein. Hierdurch wird in vorteilhafter Weise eine Betriebssicherheit der Vorrichtung bei der selbstfahrenden Bewegung erhöht, insbesondere da es durch das Versetzen der Verriegelungsmittel in den Verriegelungszustand möglich ist, den vorhergehend erläuterten geschlossenen Zustand bzw. geöffneten Zustand sicherzustellen.

In einer weiteren Ausführungsform umfassen die Applikationsmittel mindestens eine Vorschubrolle zum Antrieb der Dichtung. Die Vorschubrolle kann hierbei von der vorhergehend erläuterten Applikationsrolle verschieden sein. Die Vorschubrolle kann insbesondere zur Kraftübertragung einer Antriebskraft auf die der Vorrichtung zugeführte Dichtung dienen. Insbesondere ist es möglich, die Vorschubrolle derart anzutreiben, dass eine Vorratsschlaufe von Dichtmaterial gebildet wird. Insbesondere kann eine Drehgeschwindigkeit des die Dichtung kontaktierenden Abschnitts der Vorschubrolle von der Drehgeschwindigkeit des die Dichtung kontaktierenden Abschnitts der Applikationsrolle verschieden, insbesondere höher als diese, sein.

Die Applikations-Antriebseinrichtung kann mechanisch mit der Applikationsrolle verbunden sein, insbesondere über ein Zahnradgetriebe. Auch die Vorschubrolle kann mechanisch mit der Applikations-Antriebseinrichtung verbunden sein, insbesondere ebenfalls über ein Zahnradgetriebe. Somit ist es möglich, dass die von der Applikations-Antriebseinrichtung erzeugte Antriebskraft auf die Applikationsrolle und auch auf die Vorschubrolle übertragen wird.

Durch das Ausbilden einer Vorratsschlaufe von Dichtung ergibt sich in vorteilhafter Weise, dass in jedem Bewegungszustand, insbesondere in jeder Position, die bei der selbstfahrenden Bewegung erreicht wird, ausreichend Dichtmaterial zum Applizieren auf der Fläche zur Verfügung steht. Insbesondere bei Kurvenfahrten entlang der Fläche kann es notwendig sein, zumindest zeitweise mehr Dichtmaterial zur Applikationsrolle zuzuführen, wobei dies beispielsweise aus der Vorratsschlaufe erfolgen kann. Hierdurch ergibt sich in vorteilhafter Weise eine zuverlässige Applikation von Dichtmaterial auf die Fläche.

Weiter vorgeschlagen wird ein Verfahren zum Aufbringen einer Dichtung auf eine Fläche, insbesondere auf einen Flansch einer Fahrzeugöffnung. Das Verfahren wird hierbei mittels einer Vorrichtung gemäß einer der in dieser Offenbarung beschriebenen Ausführungsformen durchgeführt. Insbesondere ist die Vorrichtung zur Durchführung des Verfahrens ausgebildet.

Hierzu kann die erläuterte Antriebseinrichtung der Vorrichtung betrieben werden und Kraft auf mindestens eine Antriebsrolle der Vorrichtung übertragen werden.

Vor der Durchführung der selbstfahrenden Bewegung kann die Vorrichtung hierbei an dem die Fläche ausbildenden Körper befestigt werden, insbesondere durch die vorhergehend erläuterten Befestigungsmittel. Hierzu können die vorhergehend erläuterten Teilgestelle in einen gelösten Zustand versetzt werden, beispielsweise durch eine Betätigung durch einen Nutzer. Hierzu kann es notwendig sein, gegebenenfalls vorhandene Verriegelungsmittel zur Verriegelung der Relativbewegung in einen Freigabezustand zu versetzen. Weiter kann dann das Fahrgestell in der gelösten Stellung an dem Körper angeordnet werden, insbesondere derart, dass die Applikationsrolle mit einem vorbestimmten Abstand von der mit der Dichtung zu versehenden Fläche angeordnet ist. Der vorbestimmte Abstand wird hierbei insbesondere derart gewählt, dass der Abstand um ein vorbestimmtes Maß schmaler ist als die Dicke der zu applizierenden Dichtung. Weiter kann dann ein befestigter Zustand der Teilgestelle durch Relativbewegung zueinander hergestellt werden. Danach können gegebenenfalls vorhandene Verriegelungsmittel in einen Verriegelungszustand versetzt werden. Hiernach kann dann die Antriebseinrichtung aktiviert werden, wodurch dann die selbstfahrende Bewegung durchgeführt wird. Nach Beendigung der selbstfahrenden Bewegung kann dann der Verriegelungszustand gelöst, die Vorrichtung vom befestigten in den gelösten Zustand versetzt werden und die Vorrichtung von dem die Fläche ausbildenden Körper abgenommen werden.

Mit der vorgeschlagenen Vorrichtung, die auch als selbstfahrender Dichtungs-Applizierkopf bezeichnet werden kann, kann insbesondere eine abgelängte Dichtung im Dachausschnitt geklebt bzw. appliziert. Die Anwendung ist für Schiebe- sowie Panoramadächer möglich und kann an einem stehenden Fahrzeug erfolgen, insbesondere mit Unterstützung eines Nutzers (Werkers). Sie kann zudem in eine Linie im Takt- oder Fließbetrieb integriert werden. Der Applizierkopf kann von einem Werker manuell am Fahrzeug positioniert werden und dann automatisch an der Dachkante entlangfahren. Der Applizierkopf bewegt sich dabei akkubetrieben, automatisch und selbstständig um den Dachflansch, während die Dichtung appliziert wird.

Die Vorrichtung bildet ein selbstfahrendes / freifahrendes System, dass die Dichtung automatisch appliziert und das Dach nicht beschädigt. Die Vorrichtung kann einen integrierten Dichtungsvorschub und einen akkubetriebenen Applizierkopf aufweisen. Sie ist am Dachflansch stabilisierend fahrend und kann eine optimale Kurvenfahrt durch Lenkrollen und Federung gewährleisten. Sie ist für Takt- und Fließbetrieb geeignet und kann auf unterschiedliche Dichtungs- und Dachgeometrien angepasst werden. Die Antriebsgeschwindigkeit für die Dichtung ist variabel einstellbar, insbesondere zur Stauchung der Dichtung und unabhängig zur Fahrgeschwindigkeit. Gefederte Antriebsrollen ermöglichen eine optimale Ausrichtung am Dach in der Ausgangsstellung und eine gute Kurvenfahrt. Weiter wird eine variable Höheneinstellung der Dichtung ermöglicht.

Die Erfindung wird anhand von Ausführungsbeispielen näher erläutert. Die Figuren zeigen:
- Fig. 1: eine perspektivische Ansicht einer erfindungsgemäßen Vorrichtung,
- Fig. 2: eine perspektivische Detailansicht eines Riementriebs der erfindungsgemäßen Vorrichtung,
- Fig. 3: eine weitere perspektivische Ansicht der erfindungsgemäßen Vorrichtung,
- Fig. 4a: eine Seitenansicht der erfindungsgemäßen Vorrichtung in einem geschlossenen Zustand,
- Fig. 4b: eine Seitenansicht der in Fig. 4a dargestellten Vorrichtung in einem geöffneten Zustand,
- Fig. 5: eine schematische Detaildraufsicht auf einen Teil der erfindungsgemäßen Vorrichtung,
- Fig. 6: eine perspektivische Ansicht eines weiteren Teils einer erfindungsgemäßen Vorrichtung,
- Fig. 7: ein schematisches Flussdiagramm eines erfindungsgemäßen Verfahrens und
- Fig. 8: eine schematische Draufsicht auf ein Fahrzeugdach mit einer erfindungsgemäßen Vorrichtung.

Nachfolgend bezeichnen gleiche Bezugszeichen Elemente mit gleichen oder ähnlichen technischen Merkmalen.

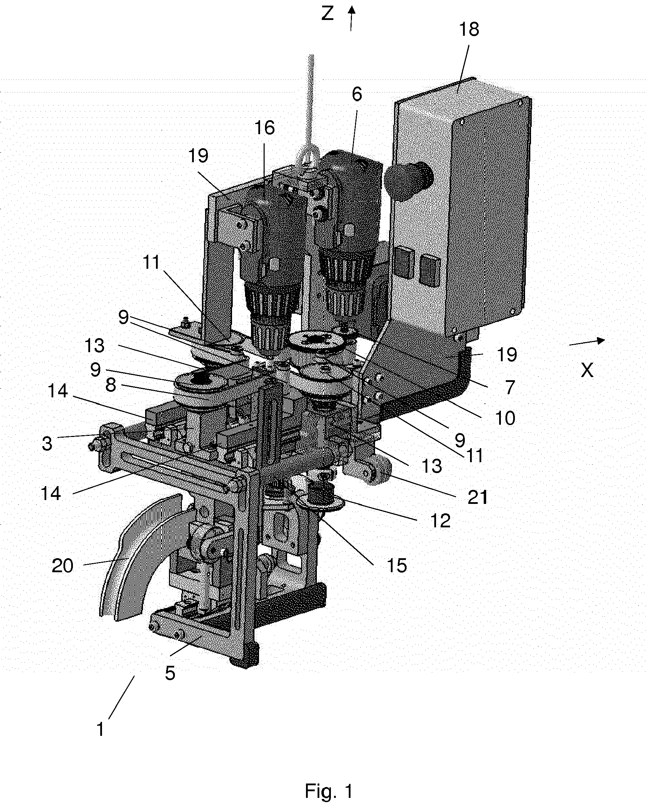

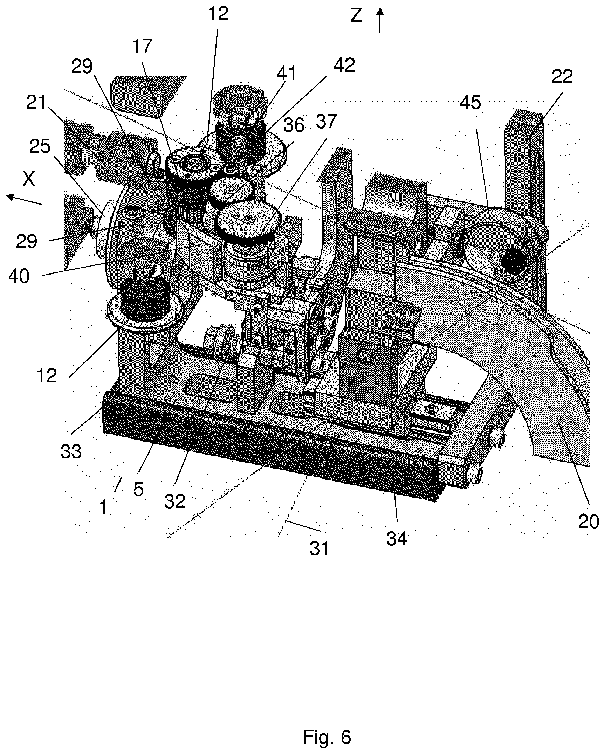

In Fig. 1 ist eine perspektivische Ansicht einer Vorrichtung 1 zum Aufbringen einer Dichtung 2 (siehe Fig. 6) dargestellt. Die Dichtung 2 ist hierbei als Dichtungsband, insbesondere als selbstklebendes Dichtungsband, ausgebildet.

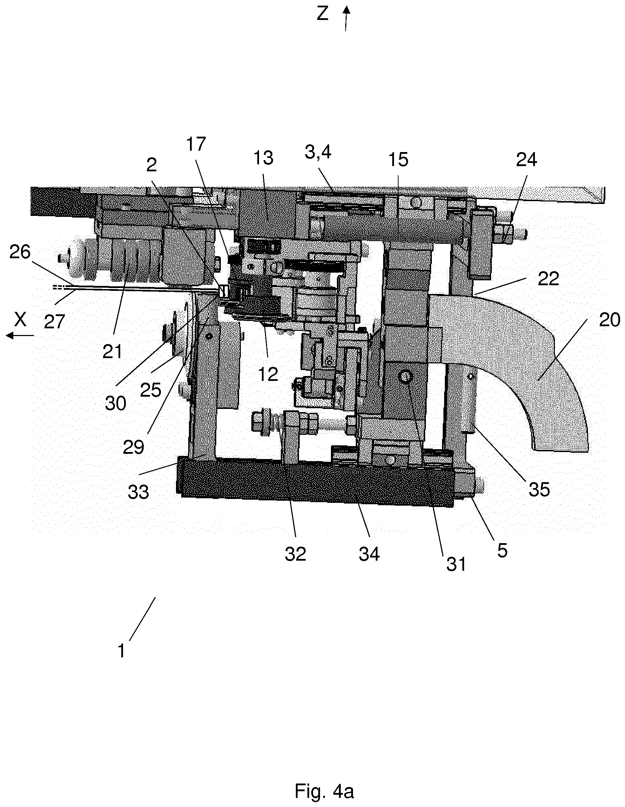

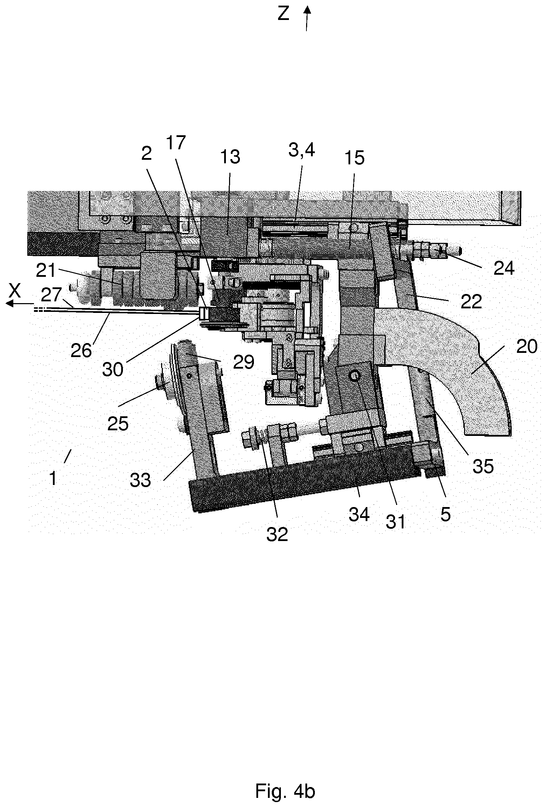

Die Vorrichtung 1 umfasst ein Fahrgestell 3, wobei das Fahrgestell 3 ein erstes Teilgestell 4 und ein zweites Teilgestell 5 umfasst, die drehbeweglich aneinander befestigt sind. Dies wird in Bezug auf Fig. 4a und Fig. 4b noch näher erläutert.

Weiter umfasst die Vorrichtung 1 eine Antriebseinrichtung 6, die als elektrische Maschine ausgebildet ist und über ein Antriebszahnrad 7 einen Riemen 8 antreibt. Die Antriebseinrichtung 6 treibt hierzu das Antriebszahnrad 7 an, welches wiederum ein Riemenantriebszahnrad 10 antreibt, welches wiederum den Riemen 8 antreibt. Der Riemen 8 wird hierbei über Umlenkrollen 9 geführt. Durch die Verwendung verschiedener Zahnräder 7, 10 kann insbesondere ein gewünschtes Übersetzungsverhältnis und somit eine Drehmoment-/Drehzahlwandlung zwischen Antriebseinrichtung 6 und Riemen erfolgen.

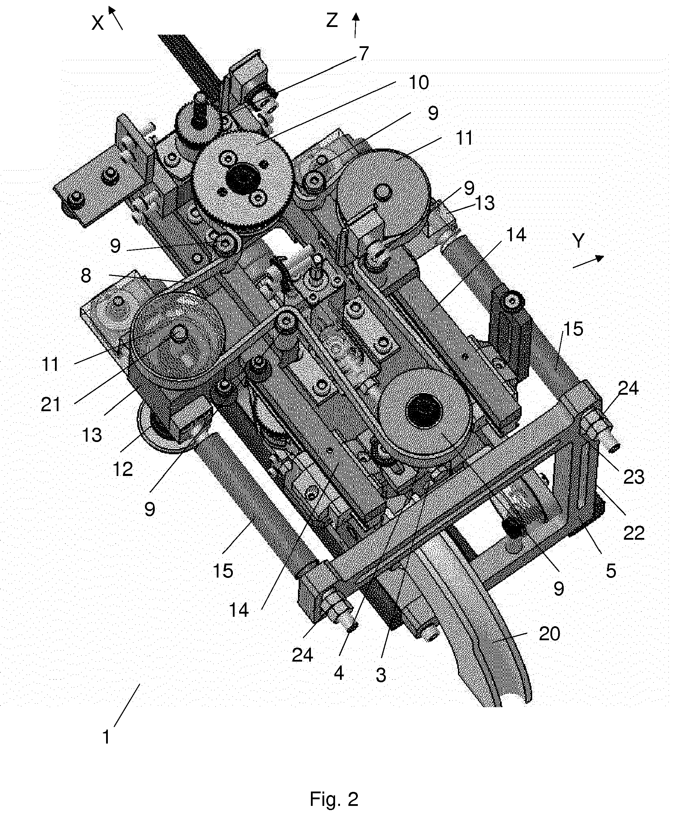

Weiter treibt der Riemen Übertragungsrollen 11 an. Diese Übertragungsrollen 11 sind mit einer Welle 21 (siehe Fig. 2) verbunden, wobei über diese Welle 21 die Drehbewegung der Übertragungsrolle 11 auf eine Antriebsrolle 12 erfolgt. Die Antriebsrolle 12 ist hierbei drehfest mit der Welle 21 verbunden.

Dargestellt ist weiter ein Referenzkoordinatensystem mit einer Vertikalachse z, einer Längsachse x und einer Querachse y, wobei die Achsen x, y, z jeweils rechtwinklig zueinander orientiert sind und ein kartesisches Koordinatensystem bilden. Im bestimmungsgemäßen Betrieb kann die Längsachse x senkrecht zu einer mit der Dichtung 2 zu versehenden Fläche 28 (siehe Fig. 4a) orientiert sein. Durch Pfeile der Achsen x, y, z symbolisiert sind eine Längsrichtung, eine Querrichtung und eine Vertikalrichtung.

Die Vertikalrichtung z kann im bestimmungsgemäßen Betrieb der Vorrichtung 1 parallel entgegensetzt zu einer wirkenden Gewichtskraft orientiert sein. Richtungsangaben wie oben, unten, über, unter können sich hierbei auf die Vertikalrichtung beziehen. Die Längsrichtung kann von der Applikationsrolle 17 auf die mit der Dichtung zu versehenden Fläche 28 zu orientiert sein.

Insbesondere kann die vorhergehend erläuterte Antriebsrolle 12 unter der Übertragungsrolle 11 angeordnet sein, wobei diese beiden Rollen 11, 12 durch die erläuterte Welle 21 miteinander verbunden sein können.

Weiter dargestellt ist, dass die Antriebsrolle 12 und die Übertragungsrolle 11 über die Welle 21 an einem Schlitten 13 gelagert sind, wobei der Schlitten 13 in und entgegen der Längsrichtung x beweglich an dem Fahrgestell 3, insbesondere dem ersten Teilgestell 4, gelagert ist. Hierzu umfasst das Fahrgestell 3, insbesondere das erste Teilgestell 4, ein Schlittenführungselement 14, welches die Linearbewegung des Schlittens 13 führt.

Weiter dargestellt sind Andruckfederelemente 15 zum Andrücken der Antriebsrollen 12 an die mit der Dichtung zu versehenden Fläche 28 bzw. den Körper, der diese Fläche 28 ausbildet. Durch die Andruckfedern 15 kann eine Kraft in Längsrichtung x auf den Schlitten 13 und somit auf die an dem Schlitten 13 gelagerte Antriebsrolle 12 ausgeübt werden.

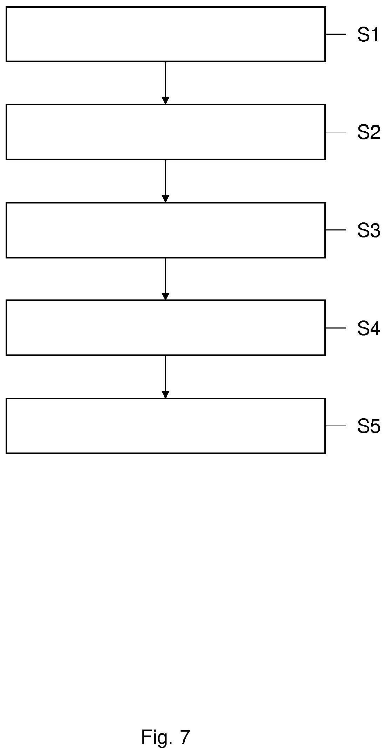

In Fig. 1 ist weiter dargestellt eine Applikations-Antriebseinrichtung 16 zum Antrieb einer Applikationsrolle 17 (siehe Fig. 6). Die Kraftübertragung von der Applikations-Antriebseinrichtung 16 auf die Applikationsrolle 17 kann über ein Zahnradgetriebe erfolgen, welches in Fig. 7 detaillierter dargestellt ist.

Weiter dargestellt ist eine Energiespeichereinrichtung 18 zur Energieversorgung der Antriebseinrichtungen 6, 16. Es ist ersichtlich, dass sowohl die Antriebseinrichtung 6, die Applikations-Antriebseinrichtung 16 und die Energiespeichereinrichtung 18 über Haltestrukturen 19 an dem Fahrgestell 3 mechanisch starr befestigt sind.

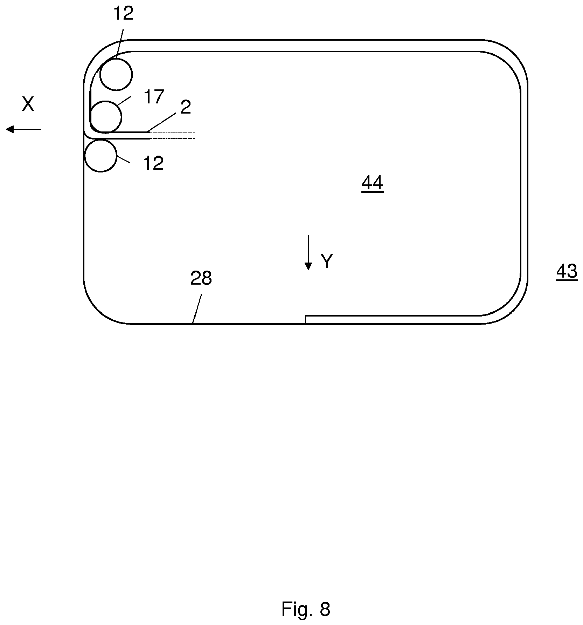

Weiter dargestellt ist ein Zuführabschnitt 20 zur Zuführung der Dichtung 2, wobei der Zuführabschnitt 20 einen gekrümmten Abschnitt aufweist. Über diesen Zuführabschnitt 20 kann die Dichtung 2 der Vorrichtung 1 und insbesondere der in Fig. 6 dargestellten Applikationsrolle 17 zugeführt werden. Weiter dargestellt ist eine Führungsrolle 21 zum Ablaufen auf einem die Fläche ausbildenden Körper, insbesondere auf einer Oberseite eines Fahrzeugdachs 43 (siehe Fig. 8).

Fig. 2 zeigt eine perspektivische Detailansicht der in Fig. 1 dargestellten Vorrichtung 1. Ersichtlich ist insbesondere das mit einer Abtriebswelle der Antriebseinrichtung 6 drehfest verbundene Antriebszahnrad 7, das Riemenantriebszahnrad 10, die Umlenkrollen 9 und der Riemen 8.

Der Riemen 8 treibt die in Fig. 1 ebenfalls dargestellten Übertragungsrollen 11 an, wobei eine der Übertragungsrollen 11 transparent dargestellt ist, um eine Kopplungswelle 21 darzustellen, die eine Übertragungsrolle 11 mit jeweils einer Antriebsrolle 12 mechanisch verbindet. Weiter dargestellt sind die Schlitten 13, die linearbeweglich entlang der Längsachse x an Schlittenführungselementen 14 gelagert sind. Weiter dargestellt sind die Andruckfedern 15, durch die eine Andruckkraft auf die Schlitten 13 in Längsrichtung ausgeübt werden kann.

Dargestellt ist weiter ein Profilelement 22 des zweiten Teilgestells 5, das Langlöcher 23 zur Aufnahme eines Abschnitts der Andruckfederelemente 15 aufweist. Hierbei sind an den Enden der Andruckfederelemente Muttern 24 angeordnet, über die sich die Andruckfederelemente 15 zur Erzeugung der Andruckkraft auf die Schlitten 13 an dem Profilelement 22 abstützen.

Der Riemenantrieb ermöglicht in vorteilhafter Weise eine zuverlässige Kraftübertragung von der Antriebseinrichtung 6 über die Übertragungsrollen 11 auf die Antriebsrollen 12 auch dann, wenn die Schlitten 13 und somit die Antriebsrollen 12 und die Übertragungsrollen 11 in oder entgegen der Längsrichtung x bewegt werden, insbesondere um bei der selbstfahrenden Bewegung einer Kontur der Fläche 28 (siehe Fig. 4a) zu folgen.

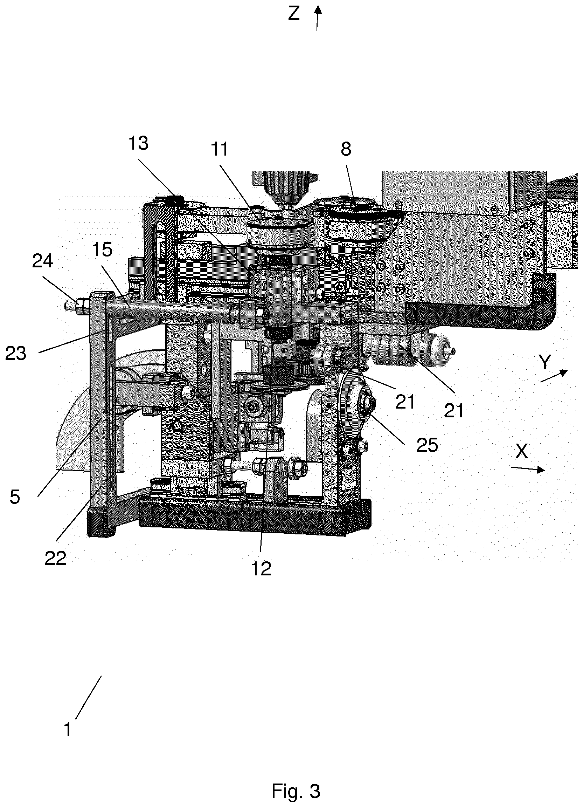

Fig. 3 zeigt eine weitere perspektivische Ansicht der in Fig. 1 dargestellten Vorrichtung 1. Dargestellt sind Fahrrollen 21 zum Ablaufen auf dem die Fläche 28 ausbildenden Körper. Die Rotationsachse dieser Fahrrollen 21 kann hierbei parallel zur Längsachse x orientiert sein. Weiter dargestellt ist eine Höhen-Führungsrolle 25, deren Rotationsachse ebenfalls parallel zur Längsachse x orientiert sein kann. Zwischen der Höhen-Führungsrolle 25 und den Fahrrollen 21 kann ein Fahrzeugdach 43 (siehe Fig. 8) angeordnet sein, also ein Abschnitt des die mit der Dichtung 2 zu versehenden Fläche 28 ausbildenden Körpers. Somit kann die Höhen-Führungsrolle 25 an einer Unterseite 27 eines Fahrzeugdachs 43 ablaufen, während die Fahrrollen 21 auf einer Oberseite 26 dieses Fahrzeugdachs 43 ablaufen (siehe Fig. 4a).

Fig. 4a zeigt eine Seitenansicht der in Fig. 1 dargestellten erfindungsgemäßen Vorrichtung 1 in einem geschlossenen Zustand. Dargestellt ist eine Oberseite 26 eines Fahrzeugdachs 43, eine Unterseite 27 des Fahrzeugdachs 43 (siehe Fig. 8) sowie die mit der Dichtung 2 zu versehende Fläche 28. Dargestellt ist weiter, dass die Höhen-Führungsrolle 25 an der Unterseite 27 des Daches anliegt und an dieser ablaufen kann. Weiter dargestellt sind die Fahrrollen 21, die auf der Oberseite 26 des Daches 43 anliegen und auf dieser ablaufen können. Weiter dargestellt ist eine Führungsrolle 29, die auf einer Innenseite 30 anliegt, wobei die Innenseite 30 der Fläche 28 gegenüberliegt und parallel zu dieser angeordnet ist. Die Führungsrolle 29 läuft bei der selbstfahrenden Bewegung entlang der Oberfläche der Innenseite 30 ab. Eine Drehachse der Führungsrolle 29 kann hierbei parallel zur Vertikalachse z orientiert sein.

Weiter dargestellt ist, dass das erste und das zweite Teilgestell 4, 5 um eine Drehachse 31, die parallel zur Querachse y (siehe z.B. Fig. 1) orientiert ist, schwenkbar aneinandergelagert sind. Weiter dargestellt ist eine weitere Andruckfeder 32, die eine Kraft entgegen der Längsrichtung auf eine linearbeweglich an dem zweiten Teilgestell 5 gelagerte Halteeinrichtung 33 für die Höhen-Führungsrolle 25 und die Führungsrolle 29 ausübt. Hierbei umfasst das zweite Teilgestell 5 die beweglich gelagerte Halteeinrichtung 33, die an einem Grundkörper 34 des zweiten Teilgestells 5 gelagert ist. Es ist möglich, die beweglich gelagerte Halteeinrichtung 33 mit der Führungsrolle 29 entlang der Längsrichtung von der Innenseite 30 entgegen der Federkraft der weiteren Andruckfeder 32 wegzuziehen, insbesondere um die Vorrichtung 1 in den in Fig. 4b dargestellten gelösten Zustand zu versetzen. In dem in Fig. 4a dargestellten geschlossenen Zustand wird die an der Halteeinrichtung 33 gelagerte Führungsrolle 29 durch die Federkraft der weiteren Andruckfeder 32 an die Innenseite 30 gedrückt und befestigt somit die Vorrichtung 1 an dem Fahrzeugdach 43.

Weiter dargestellt ist ein Hebel 35 einer Verriegelungseinrichtung in einer Verriegelungsstellung, wobei zur Visualisierung der Verriegelungseinrichtung das Zuführelement 20 semitransparent dargestellt ist. In Fig. 4a ist dargestellt, dass sich die Verriegelungseinrichtung in einem verriegelten Zustand sich befindet. In diesem verriegelten Zustand ist die Drehbewegung der beiden Teilgestelle 4, 5 um die Drehachse 31 nicht freigegeben.

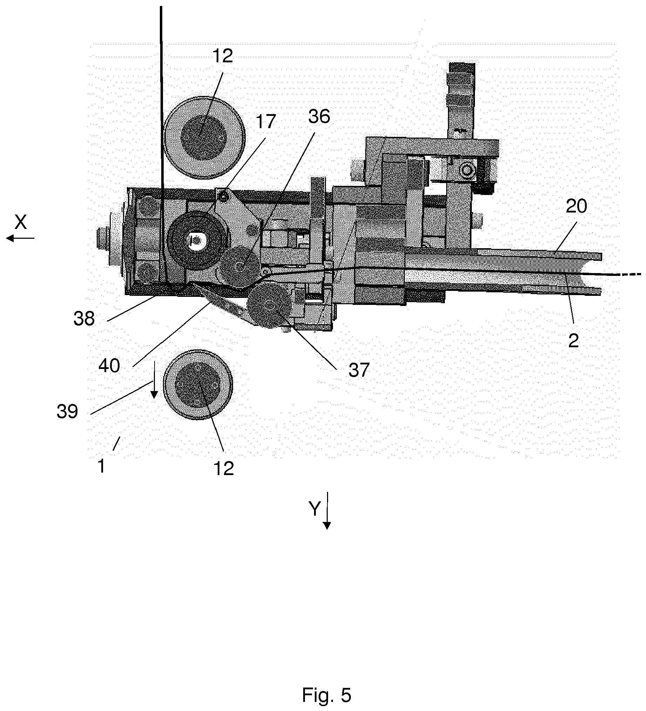

Die Verriegelungseinrichtung umfasst neben dem Hebel 35 eine Exzenterscheibe 45 (siehe Fig. 5), die an dem ersten Teilgestell 4 schwenkbar gelagert ist. Der Hebel 35 ist hierbei an der Exzenterscheibe 45 befestigt, womit diese durch Betätigung des Hebels 35 durch einen Nutzer verschwenkt werden kann. In der in Fig. 4a dargestellten Stellung ist die Exzenterscheibe 45 derart verdreht, dass diese gegen das zweite Teilgestell 5 im geschlossenen Zustand drückt und somit ein Verschwenken dieses Teilgestells 5 um die Drehachse 31 verhindert.

Fig. 4b zeigt die in Fig. 4a dargestellte Vorrichtung 1 in einem geöffneten oder gelösten Zustand. In diesem Zustand ist das zweite Teilgestell 5 um die Drehachse 31 im Vergleich zu dem in Fig. 4a dargestellten Zustand verschwenkt. Insbesondere ermöglicht der gelöste Zustand, die Vorrichtung 1 von dem Fahrzeugdach 43 in einfacher Weise abzunehmen, insbesondere entgegen der Längsrichtung.

In Fig. 4b ist der Hebel 35 in einer Freigabestellung und somit die Verriegelungseinrichtung in einem freigegebenen Zustand dargestellt. In der in Fig. 4b dargestellten Stellung ist die Exzenterscheibe 45 der Verriegelungseinrichtung derart verdreht, dass diese nicht gegen das zweite Teilgestell 5 drückt und somit ein Verschwenken dieses Teilgestells 5 um die Drehachse 31 verhindert.

Ein Schwenkwinkel kann hierbei beispielsweise in einem Bereich von 3° (einschließlich) bis 30° (einschließlich) liegen, wobei der Schwenkwinkel beispielsweise zwischen der Drehachse der Führungsrolle 25 und der Vertikalachse z eingeschlossen ist.

In dem in Fig. 4b dargestellten geöffneten Zustand kann die Vorrichtung 1 an das Fahrzeugdach 43, insbesondere im Bereich des dargestellten Flansches, angebracht werden, insbesondere derart, dass die Fahrrollen 21 auf der Oberseite 26 aufliegen. Hierzu kann die Vorrichtung 1 derart in Längsrichtung auf die Fläche 28 zu bewegt werden, dass das Fahrzeugdach 43 mit der Oberseite 26 und der Unterseite 27 in einen Raum zwischen den Teilgestellen 4, 5 eingeführt wird.

Dann kann die beweglich an dem Grundkörper 34 des zweiten Teilgestells 5 gelagerte Halteeinrichtung 33 entgegen der Federkraft der weiteren Andruckfeder 32 herausgezogen und das zweite Teilgestell in den in Fig. 4a dargestellten geschlossenen oder verspannten Zustand bewegt werden, insbesondere mit einer Drehbewegung im mathematisch negativen Sinne, bezogen auf die in Querrichtung orientierte Drehachse 31. Hierzu kann der Hebel 35 und somit auch die Exzenterscheibe 45 in den in Fig. 4a dargestellten verriegelten Zustand bewegt werden, wobei diese während dieser Bewegung das zweite Teilgestell 5 kontaktiert und in den in Fig. 4a dargestellten geschlossenen Zustand drückt. In diesem Zustand sperrt der Verriegelungshebel 35 die Schwenkbewegung zwischen dem ersten und dem zweiten Teilgestell 4, 5 des Fahrgestells 3.

Dann kann die beweglich gelagerte Halteeinrichtung 33 freigegeben und durch die Federkraft der weiteren Andruckfeder 32 mit der Führungsrolle 25 an die Innenseite 30, insbesondere die Oberfläche dieser Innenseite 30, gedrückt werden.

Die Demontage der Vorrichtung 1 von dem Fahrzeugdach 43 kann dann in umgekehrter Schrittfolge erfolgen.

Fig. 5 zeigt einen Querschnitt durch die in Fig. 1 dargestellte Vorrichtung 1, wobei die Querschnittsebene orthogonal zur Vertikalachse z orientiert ist. Dargestellt sind die Antriebsrollen 12 der Vorrichtung 1 sowie die Applikationsrolle 17, durch die eine Kraft auf die Dichtung 2 derart ausgeübt wird, dass diese an die in Fig. 4 dargestellte Fläche 28 angedrückt wird, insbesondere mit einer Klebeseite. Weiter dargestellt sind Vorschubrolle 36, 37, durch die ebenfalls eine Antriebskraft auf die Dichtung 2 ausgeübt werden kann.

Durch die Kraftübertragung auf die Dichtung 2 mit den Vorschubrolle 36, 37 kann eine Vorratsschlaufe 38 der Dichtung 2 gebildet werden, insbesondere in einem Abschnitt, der in Fahrtrichtung der Vorrichtung 1, die schematisch durch einen Pfeil 39 dargestellt ist, vor dem Applikationsabschnitt liegt. Weiter dargestellt ist ein Abziehelement 40, welches als Messer ausgebildet ist und eine Schutzfolie von der Dichtung 2 ablöst, wobei die Schutzfolie auf einer Klebefläche der Dichtung 2 angeordnet ist.

Die Applikationsrolle 17 und die Vorschubrollen 36, 37 werden durch die in Fig. 1 dargestellte Applikations-Antriebseinrichtung 16 angetrieben, insbesondere über ein Zahnradgetriebe. Hierbei kann der Antrieb derart erfolgen und/oder die Applikationsrolle sowie die Vorschubrollen 36, 37 derart ausgebildet sein, dass die Rotationsgeschwindigkeit des die Dichtung 2 betätigenden Abschnitts der Vorschubrollen 36, 37 höher ist als die Rotationsgeschwindigkeit des die Dichtung 2 betätigenden Abschnitts der Applikationsrolle 17. Hierdurch kann in vorteilhafter Weise sichergestellt werden, dass die in Fig. 5 dargestellte Vorratsschlaufe 38 ausgebildet wird.

In Fig. 5 ist dargestellt, dass sich eine der beiden Antriebsrollen 12 in Fahrtrichtung vor der Applikationsrolle 17 befindet, wobei eine weitere Antriebsrolle 12 in Fahrtrichtung hinter der Applikationsrolle 10 angeordnet ist. Die Fahrtrichtung der selbstfahrenden Bewegung ist durch einen Pfeil 39 symbolisiert und ist parallel zu der mit der Dichtung 2 zu versehenden Fläche 28 und entlang dieser orientiert.

Weiter dargestellt ist, dass die Vorratsschlaufe 38 in Fahrtrichtung vor der Applikationsrolle 17 gebildet wird. Ebenfalls ersichtlich ist, dass die Dichtung 2 der Applikationsrolle 17 entgegen der Fahrtrichtung zugeführt wird.

Fig. 6 zeigt eine schematische perspektivische Darstellung der in Fig. 5 dargestellten Ansicht der Vorrichtung 1. Im Unterschied zu der in Fig. 5 dargestellten Abbildung sind hierbei Zahnräder ersichtlich, die mit der Applikationsrolle 17, der Vorschubrolle 36 sowie der Führungsrolle 37 drehfest verbunden sind. Weiter dargestellt ist eine Welle 41 zur mechanischen Verbindung des Zahnradgetriebes mit der in Fig. 1 dargestellten Applikations-Antriebseinrichtung 16. An einem freien Ende der Welle 41 ist ein zentrales Antriebszahnrad 42 angeordnet, welches die Zahnräder der Applikationsrolle 17 und der Vorschubrollen 36, 37 durch Eingriff antreibt. Weiter ist das mit einer ersten Vorschubrolle 36 verbundene Zahnrad in Eingriff mit dem mit einer weiteren Vorschubrolle 37 verbundenen Zahnrad, wobei die Dichtung 2 zwischen den Vorschubrollen 36, 37 angeordnet ist.

Fig. 7 zeigt ein schematisches Flussdiagramm eines erfindungsgemäßen Verfahrens. Hierbei wird in einem ersten Schritt eine Vorrichtung 1 zur Aufbringung einer Dichtung 2 auf eine Fläche 28 an einem die Fläche 28 ausbildenden Körper, insbesondere an einem Fahrzeugdach 43 (siehe Fig. 8), angeordnet. Hierfür kann sich die Vorrichtung 1 in einem geöffneten Zustand, der in Fig. 4b dargestellt ist, befinden, wobei auch Verriegelungsmittel zur Verriegelung einer Relativbewegung zwischen zwei beweglich aneinander gelagerten Teilgestellen 4, 5 des Fahrgestells 3 sich in einem freigegebenen Zustand befinden können.

In einem zweiten Schritt S2 kann die Vorrichtung 1 in einen geschlossenen Zustand versetzt werden, der beispielsweise in Fig. 4a dargestellt ist. Hierfür können die beiden Teilgestelle 4, 5 relativ zueinander verschwenkt werden, insbesondere derart, dass nach dem Verschwenken sowohl die Fahrrollen 21 auf einer Oberseite 26 des Körpers als auch die Höhen-Führungsrolle an einer Unterseite 27 (siehe Fig. 4a) des Körpers anliegen. Hiernach kann die Verriegelungseinrichtung in einen verriegelten Zustand versetzt werden, wobei dann die Relativbewegung der beiden Teilgestelle 4, 5 verhindert ist. In einem dritten Schritt S3 kann dann sowohl die Antriebseinrichtung 6 als auch die Applikations-Antriebseinrichtung 16 aktiviert werden, sodass diese eine Antriebskraft erzeugen. Durch die erläuterten Kraftübertragungsmechanismen wird somit eine Antriebskraft von der Antriebseinrichtung 6 auf Antriebsrollen 12 der Vorrichtung 1 übertragen, durch die diese dann entlang der Fläche 28 (siehe Fig. 4a) bewegt wird. Parallel kann durch den Betrieb der Applikationsrolle 17 die Dichtung auf die Fläche 28 gedrückt werden. Ebenfalls kann, wie vorhergehend erläutert, durch den Betrieb der Vorschubrollen 36, 37 (siehe z.B. Fig. 6) eine Vorratsschlaufe 38 (siehe Fig. 5) gebildet werden.

In einem vierten Schritt S4 kann der Betrieb der Antriebseinrichtungen 6, 16 gestoppt werden. Hierdurch wird die Bewegung entlang der Fläche 28 gestoppt. In einem fünften Schritt S5 kann die Vorrichtung 1 wieder in den gelösten Zustand (siehe Fig. 4b) versetzt werden, wozu es notwendig sein kann, die Verriegelungseinrichtung zu lösen. Dann kann die Vorrichtung 1 von dem Fahrzeugdach abgenommen werden.

Fig. 8 zeigt eine schematische Draufsicht auf ein Fahrzeugdach 43 mit einer Öffnung 44, wobei die Öffnung 44 von einer Flanschfläche 28 umfasst ist. Weiter dargestellt sind Antriebsrollen 12 und eine Applikationsrolle 17 einer erfindungsgemäßen Vorrichtung 1 (siehe Fig. 1). Weiter dargestellt ist eine Dichtung 2, die der Vorrichtung 1 zugeführt wird und von der Applikationsrolle 17 an die Flanschfläche 28 angedrückt wird. In Fig. 8 ist dargestellt, wie die Vorrichtung 1 einem gekrümmten Verlauf der Flanschfläche 8 bei der selbstfahrenden Bewegung folgen kann. Insbesondere ist dargestellt, dass sich die Antriebsrollen 12 in verschiedenen Positionen entlang der Längsachse x befinden können, insbesondere aufgrund deren beweglicher Lagerung. Dies ermöglicht eine zuverlässige und komplikationsfreie Kurvenfahrt.

### Bezugszeichenliste

- 1: Vorrichtung
- 2: Dichtung
- 3: Fahrgestell
- 4: erstes Teilgestell
- 5: zweites Teilgestell
- 6: Antriebseinrichtung
- 7: Antriebszahnrad
- 8: Riemen
- 9: Umlenkrolle
- 10: Riemenantriebszahnrad
- 11: Übertragungsrolle
- 12: Antriebsrolle
- 13: Schlitten
- 14: Schlittenführungselement
- 15: Andruckfeder
- 16: Applikations-Antriebseinrichtung
- 17: Applikationsrolle
- 18: Energiespeichereinrichtung
- 19: Haltestruktur
- 20: Zuführelement
- 21: Welle
- 22: Profilelement
- 23: Langloch
- 24: Mutter
- 25: Höhen-Führungsrolle
- 26: Oberseite
- 27: Unterseite
- 28: Fläche, Flanschfläche
- 29: Führungsrolle
- 30: Innenseite
- 31: Drehachse
- 32: weitere Andruckfeder
- 33: bewegliche Halteeinrichtung
- 34: Grundkörper
- 35: Hebel
- 36: erste Vorschubrolle
- 37: weitere Vorschubrolle
- 38: Vorratsschlaufe
- 39: Pfeil
- 40: Abziehelement
- 41: Welle
- 42: Zahnrad
- 43: Fahrzeugdach
- 44: Öffnung
- 45: Exzenterscheibe
- S1: erster Schritt
- S2: zweiter Schritt
- S3: dritter Schritt
- S4: vierter Schritt
- S5: fünfter Schritt
- z: Vertikalachse
- x: Längsachse
- y: Querachse

## Patentansprüche

1. Vorrichtung zum Aufbringen einer Dichtung (2) auf eine Fläche (28), insbesondere auf einen Flansch einer Fahrzeugöffnung (44), wobei die Vorrichtung (1) mindestens ein Fahrgestell (3) und mindestens ein Applikationsmittel für die Dichtung (2) umfasst,
**dadurch gekennzeichnet, dass**
die Vorrichtung Mittel zur selbstfahrenden Bewegung entlang der Fläche (28) umfasst.

2. Vorrichtung nach Anspruch 1, **dadurch gekennzeichnet, dass** die Mittel zur selbstfahrenden Bewegung mindestens eine Antriebseinrichtung (6) umfassen.

3. Vorrichtung nach einem der vorangegangenen Ansprüche, **dadurch gekennzeichnet, dass** die Mittel zur selbstfahrenden Bewegung mindestens eine Energiespeichereinrichtung (18) zum Betrieb der Antriebseinrichtung (6) umfassen.

4. Vorrichtung nach einem der vorangegangenen Ansprüche, **dadurch gekennzeichnet, dass** die Mittel zur selbstfahrenden Bewegung mindestens eine Antriebsrolle (12) umfassen.

5. Vorrichtung nach einem der vorangegangenen Ansprüche, **dadurch gekennzeichnet, dass** die Mittel zur selbstfahrenden Bewegung oder Teile davon an dem Fahrgestell (3) angeordnet sind.

6. Vorrichtung nach einem der vorangegangenen Ansprüche, **dadurch gekennzeichnet, dass** die Mittel zur selbstfahrenden Bewegung einen Antriebsriemen (8) umfassen.

7. Vorrichtung nach einem der vorangegangenen Ansprüche, **dadurch gekennzeichnet, dass** die Mittel zur selbstfahrenden Bewegung mindestens eine Antriebsrolle (12) umfassen, wobei die Antriebsrolle (12) mit mindestens einem Rotationsfreiheitsgrad drehbeweglich und mit mindestens einem von diesem Rotationsfreiheitsgrad verschiedenen Freiheitsgrad beweglich ist.

8. Vorrichtung nach Anspruch 7, **dadurch gekennzeichnet, dass** die Vorrichtung (1) Führungsmittel zur Bewegungsführung der Antriebsrolle (12) umfasst.

9. Vorrichtung nach einem der vorangegangenen Ansprüche, **dadurch gekennzeichnet, dass** die Mittel zur selbstfahrenden Bewegung mindestens ein Andruckfederelement (15) zum Andrücken einer Antriebsrolle (12) umfassen.

10. Vorrichtung nach einem der vorangegangenen Ansprüche, **dadurch gekennzeichnet, dass** die Vorrichtung (1) Führungsmittel zur Bewegungsführung umfasst.

11. Vorrichtung nach einem der vorangegangenen Ansprüche, **dadurch gekennzeichnet, dass** die Vorrichtung (1) Befestigungsmittel zum Befestigen der Vorrichtung an einem die Fläche (28) ausbildenden Körper umfasst.

12. Vorrichtung nach einem der vorangegangenen Ansprüche, **dadurch gekennzeichnet, dass** das Fahrgestell (3) mindestens zwei beweglich aneinander befestigte Teilgestelle (4, 5) umfasst, wobei die Applikationsmittel an einem ersten Teilgestell (4) und mindestens eine Führungsrolle (25, 29) an einem zweiten Teilgestell (5) angeordnet sind.

13. Vorrichtung nach Anspruch 12, **dadurch gekennzeichnet, dass** die Vorrichtung (1) Verriegelungsmittel zur Verriegelung der Relativbewegung der beweglich aneinander befestigten Teilgestelle (4, 5) umfasst.

14. Vorrichtung nach einem der vorangegangenen Ansprüche, **dadurch gekennzeichnet, dass** die Applikationsmittel mindestens eine Vorschubrolle (36) zum Antrieb der Dichtung (2) umfassen.

15. Verfahren zum Aufbringen einer Dichtung (2) auf eine Fläche (28), insbesondere auf einen Flansch einer Fahrzeugöffnung (44), mittels einer Vorrichtung (1) gemäß einem der Ansprüche 1 bis 14, wobei die Vorrichtung (1) sich selbstfahrend entlang der Fläche (28) bewegt.
